# EUROPÄISCHE PATENTANMELDUNG

(11) **EP 1 286 509 A2**
(43) Veröffentlichungstag der Anmeldung: **26.02.2003**
(21) Anmeldenummer: 02102120.9
(22) Anmeldetag: 09.08.2002
(51) Int. Cl.: H04L 12/64

(54) **Verfahren und Vorrichtung zur Echokompensation in einem Telekommunikationsnetz**

(30) Priorität: 21.08.2001 DE 10140870
(71) Anmelder: SIEMENS AKTIENGESELLSCHAFT, 80333 München (DE)
(72) Erfinder: Hoffmann, Klaus, 81735 München (DE)

(57) **Zusammenfassung**

Die Erfindung betrifft ein Verfahren zur Echokompensation in einem Telekommunikationsnetz, in dem eine Nutzkanalverbindung über ein paketorientiertes Datennetz (42) zwischen einem ersten und einem zweiten Media Gateway (36, 38) erfolgt und ein Media Gateway Controller (44), zur Steuerung des ersten Media Gateway (36), vorgesehen ist. Erfindungsgemäß wird eine Echokompensation bei der Nutzkanalverbindung bedarfsweise aktiviert.

## Beschreibung

Die Erfindung betrifft ein Verfahren zur Echokompensation in einem Telekommunikationsnetz nach dem Oberbegriff von Anspruch 1 und eine entsprechende Vorrichtung nach dem Oberbegriff von Anspruch 8.

Neuere Kommunikationsarchitekturen, die paket- oder zellbasierte Verfahren zur Sprachsignalübertragung wie beispielsweise Voice over IP (VoIP) oder Voice over ATM (VoATM) nutzen, sehen die Trennung der Signalisierung und der vermittlungstechnischen Behandlung einer Kommunikationsverbindung einerseits vom Transport von Nutzinformationen andererseits vor.

Konkret werden hierzu vermittlungstechnische Netzwerke in verbindungsdienst-bezogene Einheiten (Call Feature Server) und Transport der Nutzinformationen (Träger oder Bearer) sowie Einheiten zur Steuerung dieser Nutzverbindungen (Bearer Control) aufgeteilt. Um eine Kommunikation mit herkömmlichen leitungsvermittelten Telekommunikationsnetzen bzw. PSTNs (Public Switched Telephone Networks) zu ermöglichen, ist eine "Übersetzung" zwischen diesen beiden unterschiedlichen Kommunikationsarchitekturen erforderlich.

Zur Übertragung der Nutzinformationen in den paketorientierten Datennetzen werden unterschiedliche, insbesondere hochbitratige Transporttechnologien wie die bereits erwähnten VoIP oder VoATM verwendet. Demzufolge wird hierzu ein auf dem IP (Internet Protocol) oder auf ATM (Asynchronous Transfer Mode) basierender Backbone als Fernnetz zur Übertragung von Sprachsignalen zwischen Endgeräten eingesetzt. In der Regel werden Signalisierungsinformationen gemeinsam mit den Nutzdaten transportiert. Hierzu weist jedes Datenpaket Nutzdaten, insbesondere im Paketkopf, und den Transport steuernde Information, also Signalisierungsinformationen auf. Diese Signalisierungsinformationen sind beispielsweise die IP-Adresse eines Empfängers.

Die Signalisierung kann allerdings auch unabhängig vom Träger ebenfalls über den IP/ATM-Backbone erfolgen. Ziel dieser Aufteilung in Signalisierung und Nutzinformation ist die Wiederverwendung der Telekommunikationsdienste der heutigen Schmalbandnetze in Breitbandnetzen. Dies ermöglicht vor allem, dass Teilnehmer entweder direkt über beispielsweise das DSS1 (Digital Signalling System No.1) oder über Vermittlungsstellen beispielsweise nach ISUP (ISDN User Part) an sogenannte Call Feature Server (CSF) angeschlossen werden können. Derartige Call Feature Server trennen Nutzdaten von Signalisierungsinformationen und ermögliche so die Kopplung von paketorientierten Datennetzen mit herkömmlichen leitungsvermittelten Telekommunikationsnetzen.

Am Kopplungspunkt werden die Nutzverbindungen mittels speziellen, als Media Gateways (MG) bezeichneten Servern in die benutzte Transporttechnologie umgewandelt. Media Gateways besitzen sowohl Schnittstellen zu PSTN/ISDN- als auch IP/ATM-Netzwerken und bilden damit die Schnittstellen zwischen leitungsvermittelnden und paketorientierten Netzen. Sie können in Echtzeit TDM (Time Division Multiplexing)-Sprachdaten in VoIP/VoATM-Daten und umgekehrt umwandeln. In der Regel können sie neben dieser Umwandlung lediglich die für den Aufbau einfacher Verbindungen erforderlichen Informationen umsetzen.

Die Media Gateways werden daher von zentralen Instanzen, den Media Gateway Controllern (MGC), gesteuert. Diese dienen im wesentlichen zur Koordination der Media Gateways und überwachen und steuern Verbindungen zwischen Media Gateways. Die Media Gateway Controller arbeiten zudem als Call Feature Server, um weitergehende Telekommunikationsdienste den Aufbau einfacher Verbindungen zu ermöglichen. Die Steuerung erfolgt aufgrund des MGCP (Media Gateway Controller Protocol) oder auch des H.248-Protokolls oder Q.1950-Protokolls.

Zur Kommunikation untereinander verwenden die Call Feature Server ein erweitertes ISUP Protokoll (ISUP+) oder das standardisierte BICC (Bearer Independent Call Control) Protokoll. Gegenwärtig gibt es die ITU Standards Q.1902.x BICC CS2 (Bearer Independent Call Control Capability Set 2, mit einem eigenen Service Indicator beim MTP (Message Transfer Part)) und Q765.5 BAT (Bearer Application Transport). Diese beschreiben für IP-Bearer, also auf IP basierenden Datennetzen das RTP (Real Time Protocol) als Träger-Technologie und wie einem Teilnehmer Dienste bereit zu stellen sind, die er aus den herkömmlichen leitungsvermittelten Netzen kennt.

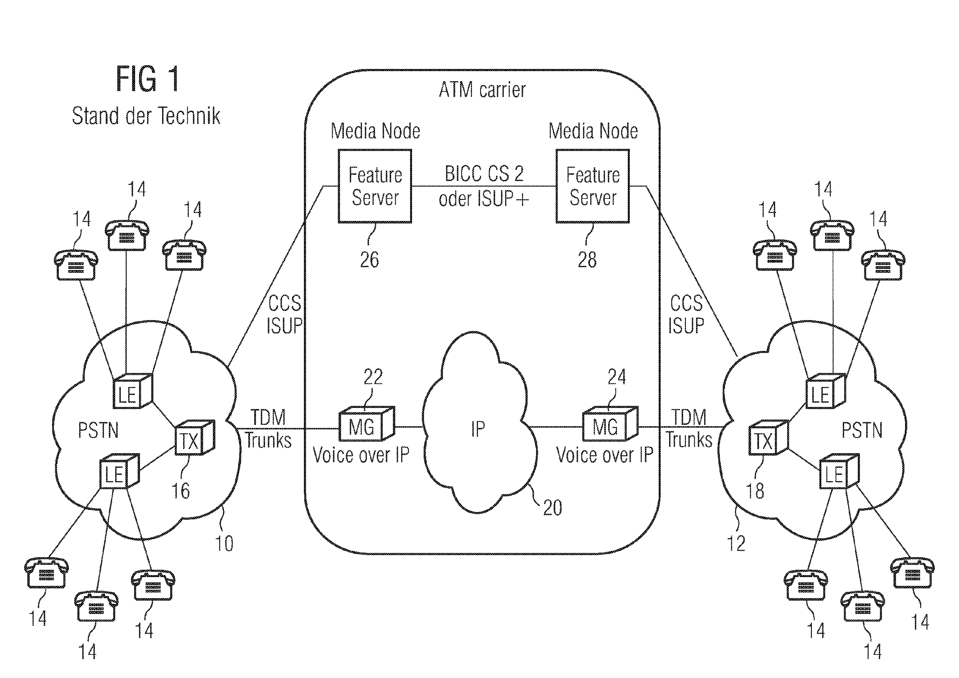

In Fig. 1 ist die Verbindung zweier PSTNs 10 und 12 über ein paketorientiertes Datennetz 20, hier das Internet, dargestellt. Die zwei PSTNs (Public Switched Telephone Networks) 10 und 12 weisen jeweils lokale Vermittlungsstellen LE (Local Exchange), an die Telefone 14 als Endeinrichtungen angeschlossen sind, und einen Übergang TX 16 bzw. 18 zu dem als Fern-Verbindungsnetz dienenden Datennetz 20 auf. Die Übergänge TX 16 und 18 sind jeweils sowohl mit einem Media Gateway Controller 26 bzw. 28 als auch mit einem Media Gateway 22 bzw. 24 verbunden.

Die Media Gateways 22 und 24 sind direkt mit dem Internet 20 als IP-Bearer verbunden. Sie dienen im wesentlichen zum Entund Verpacken von Datenpaketen, die über das Internet 20 empfangen oder gesendet werden. Mit den Datenpaketen wird die Nutzinformation einer Verbindung zwischen den beiden PSTNs 10 und 12 übertragen. Die Verbindungssteuerung erfolgt über die Media Gateway Controller 26 und 28, die Informationen mittels BICC CS2 oder ISUP+ austauschen. Zur Common Channel Signaling (CCS) zwischen den Übergängen TX 16 und 18 und den Media Gateway Controllern 26 bzw. 28 wird als Protokoll ISUP verwendet.

Allerdings können insbesondere bei VoIP-Verbindungen zwischen Media Gateways derart große Laufzeiten auftreten, dass eine Echokompensation erforderlich wird, um eine ausreichend hohe Qualität einer Sprachverbindung zu erhalten. Derzeit wird davon ausgegangen, dass bei einer VoIP-Verbindung immer eine Echokompensation, beispielsweise in den IP-Endpunkte bildenden Media Gateways, notwendig ist. Daher wird in der Regel von einer festen Verzögerung ausgegangen und die Echokompensation an dieser Verzögerung entsprechend ausgerichtet. Echokompensation erfordert jedoch einen zusätzlichen Aufwand, wenn sie dauerhaft aktiv ist.

Der Erfindung liegt daher die Aufgabe zugrunde, den Aufwand, der durch die Echokompensation in den gattungsgemässen Telekommunikationsnetzen erforderlich ist, zu verringern.

Diese Aufgabe wird durch ein Verfahren zur Echokompensation in einem Telekommunikationsnetz mit den Merkmalen nach Anspruch 1 und durch eine entsprechende Vorrichtung mit den Merkmalen nach Anspruch 10 gelöst. Bevorzugte Ausgestaltungen ergeben sich aus den abhängigen Ansprüchen.

Ein wesentlicher Punkt der Erfindung ist eine dynamische, nicht statische Nutzung oder bedarfsweise Aktivierung von Echokompensation. Es konnte nämlich festgestellt werden, dass eine Echokompensation entgegen der bisherigen Annahme nicht immer erforderlich ist.

Die bisherige Annahme beruht vor allem auf dem aktuellen Ausbau von paketorientierte Datennetzen wie dem Internet, lässt jedoch unberücksichtigt, dass in Zukunft ein rasch fortschreitender Ausbau derartiger Datennetze aufgrund des steigenden Datenübertragungsvolumens zu erwarten ist. Dann wird auch der Quality of Service (QOS) von Sprachverbindungen über diese Datennetze steigen. Hier setzt die Erfindung mit dem Gedanken an, eine aufwendige Echokompensation nur dann zu aktivieren, wenn sie wirklich erforderlich ist. Dies ermöglicht den Betreibern von derartigen Telekommunikationsnetzen eine möglichst kostengünstige Ausnutzung von vorhandenen Ressourcen, insbesondere von Ressourcen zur Echokompensation.

Konkret betrifft die Erfindung ein Verfahren zur Echokompensation in einem Telekommunikationsnetz, in dem eine Nutzkanalverbindung über ein paketorientiertes Datennetz zwischen einem ersten und einem zweiten Media Gateway erfolgt. Ferner ist ein Media Gateway Controller vorgesehen, der zumindest das erste MG steuert. Die Echokompensation wird bei einer Sprachverbindung bedarfsweise aktiviert, wenn dies tatsächlich erforderlich ist, weil die Laufzeit von Datenpaketen über ein paketorientiertes Datennetz groß ist. Vorzugsweise wird die Echokompensation eingeschaltet, wenn die Laufzeit von Datenpaketen einen vorgegebenen Schwellwert überschreitet.

Während des Bestehens der Nutzkanalverbindung werden hierzu ein Jitter-Buffer und (an sich bekannte) Mittel zur Erfassung des sogenannten "Roundtrip Delay" als Laufzeit-Messmittel für die Nutzkanalverbindung beobachtet und bei Überschreiten eines vorgegebenen Verzögerungswertes ("Propagation Delay") eine Meldung versandt und gegebenenfalls die Echokompensation aktiviert werden. Die Länge des Jitter-Buffer geht in diesen neben der Hälfte des aktuellen "Roundtrip" ein, so daß mit der Beobachtung des Jitter-Buffer eine Laufzeitüberwachung möglich ist. Die Detektion des aktuellen Laufzeitwertes wird insbesondere in einem "Encapsulated Notification Request" mit dem RTP-Package initiiert.

Für MGCP wird folgendes Event im RTP-Package neu vorgeschlagen:
Package Name: R
Symbol Definition R S Duration
PD(###) Propagation delay exceeded X

Propagation delay exceeded: Das MG wird aufgefordert, ab einem Delay ### (in ms) dem MGC den tatsächlichen Delay (###) (in ms) zu melden. Dabei setzt sich der Propagation delay aus dem halben Roundtrip und dem Jitter buffer zusammen.

Bei Anwendung einer Kommunikation zwischen MGC und MG können auf Basis von MGCP oder H.248 Echokompensatoren lokal oder entfernt durch Anwendung von ISUP (ISDN User Part, Q.761-Q.764) und gegebenenfalls BICC bzw. ISUP+ dynamisch bei Erfordernis eingeschaltet werden.

Vor Aktivierung einer Echokompensation und bei Beginn des Aufbaus der Nutzkanalverbindung wird in einer bevorzugten Ausführungsform des Verfahrens eine Messung des Roundtrip-Delays zwischen erstem und zweitem MG durchgeführt, um die (initiale) Laufzeit von Datenpaketen auf der Nutzkanalverbindung zu ermitteln. Nach diesem initialen Meßvorgang werden die Laufzeitmessungen während der Datenübertragung laufend fortgeführt.

Neben der Anwendung von BICC als Protokoll für die Kommunikation zwischen MGCs kann auch ISUP+ angewendet werden. H.248 kann neben MGCP als Protokoll für die Kommunikation zwischen MGC und MG benutzt werden, insbesondere nach einer entsprechenden Protokollerweiterung.

Das Verfahren ist nicht auf den bevorzugten RTP Bearer als Bearerprotokoll beschränkt, sondern kann grundsätzlich auch auf andere Bearertechnologien angewendet werden.

Eine erfindungsgemäße Vorrichtung zur Echokompensation in einem Netz, in dem eine Nutzkanalverbindung über ein paketorientiertes Datennetz zwischen einem ersten und einem zweiten MG besteht und ein MGC, der zumindest das erste MG steuert, vorgesehen ist, weist Steuermittel zur bedarfsweisen Aktivierung einer Echokompensation bei der Nutzkanalverbindung auf. Die Steuermittel können soft- oder auch hardwaremäßig ausgebildet sein. Vorzugsweise sind die Steuermittel Teil des MGC.

Eine wesentliche Komponente der Echokompensations-Steuermittel ist eine Vergleichereinheit, welche über einen ersten Eingang (Messignaleingang) Laufzeit-Messwerte über eine Meldung vom MG erhält und über einen zweiten Eingang (Vergleichssignaleingang) mit einem Laufzeit-Schwellwertspeicher zur Speicherung eines vorprogrammierten Laufzeit-Schwellwertes verbunden ist. Die Vergleichereinheit gibt im Ergebnis des Vergleiches der aktuellen Laufzeit mit dem als Referenz vorgespeicherten Laufzeit-Schwellwert ein Steuersignal aus, welches eine Aktivierung oder ein Inaktiv-Bleiben des Echokompensators bewirkt.

Als "Laufzeit-Messmittel" kann zumindest ein Media Gateway mindestens einen Jitter-Buffer aufweisen, in dem Datenpakete der Nutzkanalverbindung zwischengespeichert werden. Die Länge des Jitter-Buffers kann dann - zusammen mit dem o. g. "Roundtrip Delay" - als Kriterium für die Entscheidung über die Versendung einer Meldung (NTF) dienen. Sie beschreibt die Varianz der Ankunft von Paketen an einem Empfangspunkt und bildet den ersten Summanden eines "Propagation Delay", in den als zweiter Summand die Hälfte des aktuellen "Roundtrip" (wie in RFC1889, Kapitel 6.3.1. über die Zeitstempel = Timestamps bestimmt) eingeht.

Die Erfindung wird nachfolgend anhand eines Ausführungsbeispiels in Verbindung mit den Zeichnungen erläutert. Die Zeichnungen zeigen in
Fig. 1 ein aus dem Stand der Technik bekanntes Telekommunikationsnetz, in dem Sprachsignale paketorientiert übertragen werden und eine Aufteilung bzw. Trennung von Signalisierung und Vermittlung vom Nutzinformations-Transport eingesetzt wird, und
Fig. 2 ein Ausführungsbeispiel eines Telekommunikationsnetzes, in dem eine Aufteilung bzw. Trennung von Signalisierung und Vermittlung vom Nutzinformations-Transport und das erfindungsgemäße Verfahren zur Echokompensation eingesetzt wird.

Zur Beschreibung von Fig. 1 wird auf die Beschreibungseinleitung verwiesen. Im folgenden können für gleiche Elemente sowie Elemente mit gleicher Funktionalität die selben Bezugszeichen verwendet werden. Zur Erläuterung der verwendeten Abkürzungen sei auf die Liste der Bezugszeichen und Abkürzungen verwiesen.

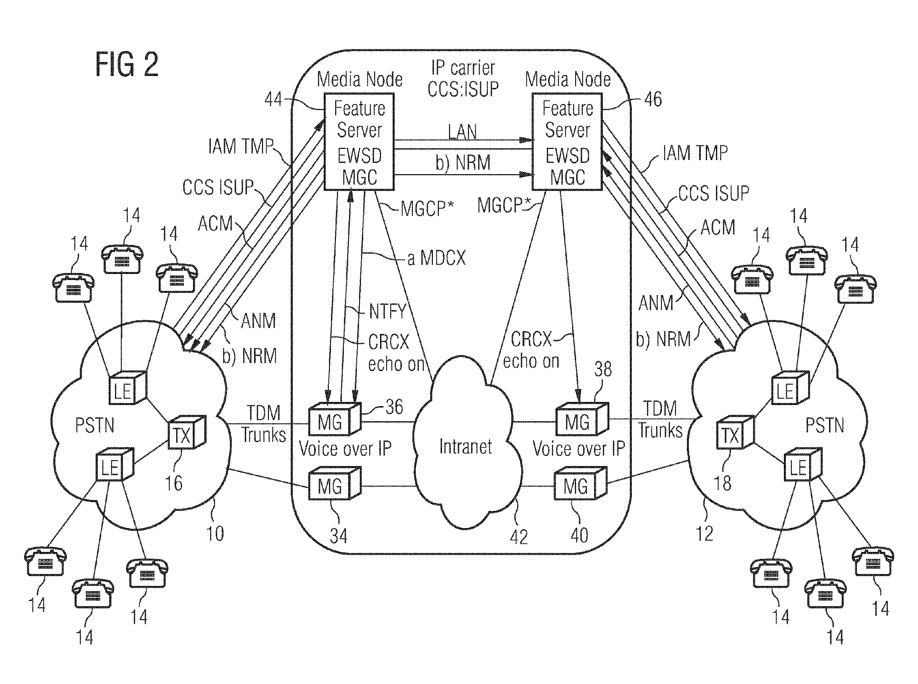

Die grundsätzlichen Abläufe des erfindungsgemäßen Verfahrens sind in Fig. 2 zu finden, wobei der Übersichtlichkeit halber darauf verzichtet wurde, die Quittungsmeldungen von MGCP wiederzugeben. Es wird nur auf wesentliche Aspekte der Anwendung des Einschaltens der Echokompensatoren eingegangen. Der grundsätzliche Verbindungsaufbau wird als bekannt vorausgesetzt.

In Fig. 2 ist ein Telekommunikationsnetz dargestellt, das zwei PSTNs 10 und 12 aufweist, die über ein paketorientiertes Datennetz 42, hier ein Intranet, miteinander kommunizieren können. (Die Netze können zwei Telekommunikationsnetze eines Unternehmens an unterschiedlichen Standorten sein.) Um eine kostengünstige Sprachkommunikation zwischen den Standorten zu ermöglichen, werden Sprachverbindungen zwischen dem PSTN 10 und dem PSTN 12 mittels VoIP durchgeführt. Wesentlich ist somit, dass in den PSTNs 10 und 12 eine herkömmliche leitungsvermittelte Kommunikation stattfindet, während im Datennetz 42 als Fernnetz Sprachsignale kostengünstig paketorientiert übertragen werden.

Die PSTNs 10 und 12 weisen jeweils lokale Vermittlungsstellen LE und einen Übergang TX 16 bzw. 18 auf. An den lokalen Vermittlungsstellen LE sind Telefone 14 als Endgeräte zur Sprachkommunikation angeschlossen. Die Übergänge TX 16 und 18 dienen zum Koppeln der PSTNs 10 und 12 an das paketorientierte Datennetz 42.

Einen Übergang von einer leitungsvermittelten auf eine paketorientierte Sprachverbindung ermöglichen die Media Gateways 34, 36, 38 und 40. Hierzu sind die Media Gateways 34, 36 und 38, 40 mit den Übergängen 16 bzw. 18 des PSTNs 10 bzw. 12 verbunden.

In Fig. 2 ist ferner die Steuerung der Media Gateways 36 und 38 über Media Gateway Controller bzw. Call Feature Server 44 bzw. 46 dargestellt. Die Media Gateway Controller bzw. Call Feature Server 44 bzw. 46 können als Einheiten einer oder mehrerer herkömmlicher Vermittlungsanlagen ausgebildet sein, beispielsweise als spezielle Einschubkarten.

Mit dem Empfang der Meldung "IAM" des ISUP bzw. BICC/ISUP+ in den beiden Media Gateway Controllern 44 und 46 wird jeweils nach der Auswertung des TMR's die Meldung "CRCX" (Create Connection) des MGCP* mit dem Hinweis, keine Echokompensatoren einzuschalten, gesendet; gleichzeitig wird in dem "Encapsulated Notification Request" mit dem RTP Package die Detektion von Änderungen im neuen proprietären MGCP "Requested Event" "Propagation Delay Exceeded" im Media Gateway 36 aktiviert.

Wenn dann das Media Gateway 38 später feststellt, dass der Buffer größer wird, meldet es dieses Ereignis an den Media Gateway Controller 44, und zwar mit einer NTFY. Im Media Gateway Controller 44 wird dann untersucht, ob die Größe des Buffers jenseits der empfohlenen Laufzeit liegt, ab der Echokompensatoren etwa einzuschalten sind.

Entsprechend den Möglichkeiten des Signalisierungsnetzes, in dem sich der Media Gateway Controller 44 befindet, kann er nun entweder im eigenen Media Gateway 36 lokal mit Hilfe der Meldung "MDCX" 50 des MGCP den Echokompensator einschalten, oder über die "Enhanced Echo Control Procedure" nach Kapitel 2.7.2 des ITU-T Standards Q.764 mit Hilfe der Meldung "NRM" (Network Resource Management) über ISUP und/oder BICC bzw. ISUP+ einen weiter zu den durch die Media Gateways 36 und 38 definierten Endpunkten der Sprachverbindung hin oder sogar jenseits von diesen liegenden Echokompensator entfernt aktivieren.

Damit werden die Echokompensatoren nur aktiviert, falls die Laufzeiten einer bestehenden Sprachverbindung zu groß geworden sind. Es ist anzumerken, dass, falls die durch die Meldung "NRM" ausgelöste Prozedur nicht angewendet würde (also nur lokales Einschalten), es bei einem Hintereinanderschalten von TDM-IP-TDM -IP-Verbindungen nicht verhindert werden kann, dass mehrere Echokompensatoren eingelegt werden.

## Patentansprüche

1. Verfahren zur Echokompensation in einem Telekommunikationsnetz, in dem eine Nutzkanalverbindung über ein paketorientiertes Datennetz (42) zwischen einem ersten und einem zweiten Media Gateway (36, 38) erfolgt und eine Steuerung, insbesondere ein Media Gateway Controller (44), zur Steuerung des ersten Media Gateways (36) vorgesehen ist,
**dadurch gekennzeichnet,**
**dass** eine Echokompensation bei der Nutzkanalverbindung bedarfsweise aktiviert wird.

2. Verfahren nach Anspruch 1,
**dadurch gekennzeichnet,**
**dass** die Echokompensation in Abhängigkeit von einer Laufzeiterfassung dann aktiviert wird, wenn die Laufzeit von Datenpaketen einen vorgegebenen Schwellwert überschreitet.

3. Verfahren nach Anspruch 2,
**dadurch gekennzeichnet,**
**dass** während des Bestehens der Nutzkanalverbindung das Überschreiten eines vorgegebenen Betrages einer Verzögerungszeit, die sich aus der Länge eines Jitter-Buffers und dem halben aktuellen Roundtrip gemäß RFC1889, Kapitel 6.3.1. ergibt, beobachtet wird eine Meldung an die Steuerung abgesetzt und durch diese wahlweise die Echokompensation lokal und/oder entfernt aktiviert wird.

4. Verfahren nach Anspruch 1 oder 2,
**dadurch gekennzeichnet,**
**dass** bei einer Anwendung einer Kommunikation zwischen der Steuerung und dem Media Gateway (36) auf Basis von MGCP oder H.248 oder Q.1950 mindestens eine Echokompensation lokal oder entfernt durch Anwendung von ISUP und gegebenenfalls BICC bzw. ISUP+ dynamisch aktiviert wird.

5. Verfahren nach einem der vorhergehenden Ansprüche,
**dadurch gekennzeichnet,**
**dass** bei Beginn des Aufbaus der Nutzkanalverbindung und vor einer Aktivierung der Echokompensation eine Messung des Roundtrip-Delays zwischen dem erste und dem zweiten Media Gateway (36, 38) durchgeführt wird, um die Laufzeit von Datenpaketen auf der Nutzkanalverbindung zu ermitteln.

6. Verfahren nach einem der vorhergehenden Ansprüche,
**dadurch gekennzeichnet,**
**dass** als Bearerprotokoll ein RTP Bearer oder ATM Bearer eingesetzt wird.

7. Verfahren nach einem der vorhergehenden Ansprüche,
**dadurch gekennzeichnet,**
**dass** H.248 oder MGCP oder Q.1950 als Protokoll für die Kommunikation zwischen dem Media Gateway Controller (44, 46) und dem Media Gateway (36, 38) benutzt wird.

8. Verfahren nach einem der Ansprüche 2 bis 7,
**dadurch gekennzeichnet,**
**dass** eine Überschreitung des vorgegebenen Laufzeit-Schwellwertes im Informationselement einer NTFY gemeldet wird.

9. Verfahren nach Anspruch 8,
**dadurch gekennzeichnet,**
**dass** in der Steuerung oder den Steuerungen die TMR's ausgewertet und im Ergebnis der Auswertung Steuersignale zur Aktivierung/Nichtaktivierung der Echokompensation generiert werden.

10. Vorrichtung zur Echokompensation in einem Telekommunikationsnetz, in dem eine Nutzkanalverbindung über ein paketorientiertes Datennetz (42) zwischen einem ersten und einem zweiten Media Gateway (36, 38) besteht und eine Steuerung, insbesondere ein Media Gateway Controller (44), zur Steuerung des ersten Media Gateways (36), vorgesehen ist,
**dadurch gekennzeichnet,**
**dass** Echokompensations-Steuermittel zur bedarfsweisen Aktivierung eines Echokompensators bei der Nutzkanalverbindung vorgesehen sind.

11. Vorrichtung nach Anspruch 10,
**dadurch gekennzeichnet,**
**dass** die Echokompensations-Steuermittel einen Schwellwertspeicher zur Speicherung eines vorgegebenen Laufzeit-Schwellwertes und eine eingangsseitig mit diesem verbundene und aktuelle Laufzeit-Meßwerte empfangende Vergleichereinheit zum Vergleich eines gemessenen Laufzeitwertes mit einem gespeicherten Schwellwert und zur Ausgabe eines das Vergleichsergebnis repräsentierenden Ausgangssignals aufweist.

12. Vorrichtung nach Anspruch 11,
**dadurch gekennzeichnet,**
**dass** die Laufzeit-Messmittel einen Jitter-Buffer und Mittel zur Messung des Roundtrip-Delay gemäß RCF1899, Kap. 6.3.1, aufweisen.
